# EUROPEAN PATENT APPLICATION

(11) **EP 3 409 720 A1**
(43) Date of publication of application: **05.12.2018**
(21) Application number: 16863591.0
(22) Date of filing: 07.11.2016
(51) Int. Cl.: C08L 27/18, C08L 5/08, C08J 9/00

(54) **POROUS NON-METALLIC MATERIAL**

(30) Priority: 11.11.2015 CN 201510767126
(71) Applicant: Chongqing Runze Pharmaceutical Company Limited, Chongqing 401120 (CN)
(72) Inventor: YE, Lei, Yubei Chongqing 401120 (CN)
(74) Representative: Inal, Aysegul Seda
(86) International application number: PCT/CN2016/104836
(87) International publication number: WO 2017/080415

(57) **Abstract**

The present invention provides a porous non-metallic material including a material body, the material body is composed of pore cavities and cavity walls formed by surrounding the pore cavities in three-dimensional space. The pore cavities are uniformly distributed, and each pore cavity is three-dimensionally interconnected. The pore cavities are uniformly distributed means that the pore cavities are uniformly distributed under any unit-level volume on the porous material. The present invention provides a specific and clear measurement method for pore cavities distribution uniformity of the porous material, that is, the pore distribution uniformity of the porous material and the hierarchical structure thereof is measured on the scale of the small unit-level volume. Such porous structure is highly uniform, thereby ensuring the uniformity of the properties of the porous material.

## Description

### TECHNICAL FIELD

The present invention relates to a porous material, specifically relates to a porous non-metallic material.

### BACKGROUND

A porous material is a solid material containing a certain number of pores, and is a material having a network structure formed by interconnected or closed pores. Compared with continuous medium materials, porous materials generally have the advantages of low relative density, high specific strength, high specific surface area, light weight, sound insulation, heat insulation, good permeability, etc. According to the pore size, the porous material can be classified into microporous (pore size is less than 2 nm) material, mesoporous (pore size is 2 - 50 nm) material and macroporous (pore size is greater than 50 nm) material.

Porous materials can be classified into metallic porous materials and non-metallic porous materials according to their materials. Non-metallic porous materials generally have the characteristics of large specific surface area, small density, small thermal conductivity, small relative density, high porosity, etc., thus having broad application prospects in fields of catalysts (including carriers), adsorbents, heat preservation, heat insulation, sewage and waste gas treatment, filtration of liquids and gases (even bacteria), lightweight building materials, environmental protection, soil improvement, chemical engineering, etc.

CN104355302 discloses a preparation method of a lightweight nanoporous material carbon aerogel, the lightweight nanoporous material carbon aerogel is prepared by graphene oxide cross-linked polyamic acid aerogel and has different pores of 50 - 200 nm, 1.4 nm and 13 - 40 nm inside. Due to the randomness and irregularity of the pore structure, the preparation method cannot produce regular pores, and the porous material of this structure still cannot meet the performance requirements in different applications.

In many applications, the porous material itself is required to be uniform, and its pore size and pore distribution are uniform to ensure uniformity of performance, but in fact, many porous materials do not meet this requirement and uniformity thereof is insufficient. Although some materials claim to achieve higher uniformity, the materials are still uniformity at a large volume scale. If it is measured at a small volume scale, for example, if a portion of a plurality of three-dimensional blocks having volume of less than or equal to one cubic centimeter are taken from the material to measure their masses respectively, the difference in uniformity is still very large. Therefore, various properties of the porous materials such as strength, elastic modulus, etc. are nonuniform, which seriously affects their function.

### SUMMARY

The objective of the present invention is to provide a porous non-metallic material with suitable and controllable structure and uniform height.

The objective of the present invention is achieved by the following measures:
A porous non-metallic material includes a material body having pore cavities and cavity walls formed by surrounding the pore cavities in three-dimensional space. The pore cavities are uniformly distributed, and each pore cavity is three-dimensionally interconnected. The pore cavities are in uniform distribution means that the pore cavities are uniformly distributed under any unit-level volume on the porous material.

Specifically, the above-mentioned unit-level volume refers to a cubic centimeter level, or a cubic millimeter level, or a smaller unit-level volume.

More specifically, the uniform distribution of the above-mentioned pore cavities means that masses of a plurality of three-dimensional blocks randomly selected from the porous material and having volumes of less than or equal to one cubic centimeter and the same sizes are substantially the same.

More specifically, masses are substantially the same means, a plurality of three-dimensional blocks having volumes of less than or equal to one cubic centimeter and the same sizes are randomly selected from the porous material to measure their masses, then an average value of the masses is obtained, and an absolute value of the deviation of the mass of any three-dimensional block from the average value of the masses is less than or equal to 4% of the average value of the masses of the three-dimensional blocks.

Further, masses of a plurality of three-dimensional blocks randomly selected from the porous material and having volumes of less than or equal to one cubic millimeter and the same sizes are substantially the same.

More specifically, masses are substantially the same means, a plurality of three-dimensional blocks having volumes of less than or equal to one cubic millimeter and the same sizes are randomly selected from the porous material to measure their masses, then an average value of the masses is obtained, and an absolute value of the deviation of the mass of any three-dimensional block from the average value of the masses is less than or equal to 4% of the average value of the masses of the three-dimensional blocks.

Preferably, the above-mentioned porous non-metallic material is composed of a multilevel porous material, the body of the multilevel porous material is composed of pore cavities graded according to a material pore size and cavity walls formed by surrounding the pore cavities in three-dimensional space, and the cavity walls are provided with lower-level pore cavities, and pore cavities of the same level are three-dimensionally interconnected and the pore cavities of different levels are also interconnected. More specifically, next-level porous materials constitute cavity walls of previous-level pore cavities. The cavity walls of the upper-level pore cavities are composed of lower-level multilevel porous materials or a composite of each level of lower-level porous materials, so that the material can meet specific functional requirements.

Specifically, each level porous material of the material body is a continuous structure respectively. A maximum outer boundary of each level porous material is equivalent to a space boundary of an entire material body, that is, each level porous material can exist in the material body as an independent porous material and has its own physical and chemical properties. The structure can make porous materials of different levels have different physicochemical properties respectively, showing different physicochemical properties in the entire space of the relatively fixed material, and meet various functional requirements better.

The above-mentioned porous non-metallic material may be a ceramic material, a carbon material, a glass material, a fiber material, a gel material, etc.

For example, a porous non-metallic material, including a polytetrafluoroethylene material body, has pore cavities with a pore size of 100 nm to 500 µ m and cavity walls formed by surrounding the pore cavities in three-dimensional space, the pore cavities are uniformly distributed and each pore cavity is three-dimensionally interconnected, and the pore cavities are uniformly distributed refers to that the pore cavities are uniformly distributed under any unit-level volume on the porous material.

The above-mentioned porous non-metallic material is composed of a multilevel porous polytetrafluoroethylene material, the material body is composed of pore cavities graded according to a material pore size and cavity walls formed by surrounding the pore cavities in three-dimensional space, and the cavity walls are provided with lower-level pore cavities having pore size of 10 - 100 nm, and pore cavities of the same level are three-dimensionally interconnected and the pore cavities of different levels are also interconnected. More specifically, the cavity walls of the upper-level pore cavities are composed of lower-level multilevel porous materials or a composite of each level of lower-level porous materials, so that the material can meet specific functional requirements.

The present invention has the following advantages:
1. The present invention provides a material with a porous structure, structural form thereof is clarified, and the hierarchical structure form of the pore cavities and the uniform structure thereof can satisfy various functional requirements.
2. The present invention provides a specific and clear measurement method for pore cavities distribution uniformity of the porous material, that is, the pore cavities distribution uniformity of the porous material and the hierarchical structure thereof is measured on the scale of the small unit level. Such porous structure is highly uniform, thereby ensuring the uniformity of the properties of the porous material.
3. The porous material of the present invention is three-dimensionally interconnected, including that pore cavities of the same level thereof are three-dimensionally interconnected and the pore cavities of different levels thereof are also three-dimensionally interconnected, and the connectivity is good, and the functional requirements of materials can be fully satisfied.

### DETAILED DESCRIPTION OF THE EMBODIMENTS

The detailed embodiments are given on the premise of the technical solution of the present invention, but the protection scope of the present invention is not limited to the following embodiments. It is obvious that various alternatives or modifications can be made according to the ordinary skills in the art and/or conventional means without departing from or changing the spirit of the prevent invention, which are included within the scope of the present invention.

### Embodiment 1

The porous material of the present invention is polytetrafluoroethylene having a secondary pore structure, wherein, the cavity walls of first-level pore cavities which are evenly distributed and interconnected are provided with the second-level pore cavities which are evenly distributed and interconnected. The two levels of pore cavities are also interconnected, and the interconnection is a three-dimensional interconnection. Each level porous material of the material body is a continuous structure respectively. The total effective porosity is 70%, the average pore size of the large pore cavities is 0.45 µ m, and the cavity walls of the large pore cavities are provided with interconnected small pore cavities having an average pore size of 30 nm.

Nine three-dimensional blocks with the same size of 10mm×10mm×10mm were randomly taken from the porous material by mechanical processing method and the masses thereof were measured with a Mettler-Toledo XP26 Microbalance. The results are shown in Table 1, wherein an absolute value of a deviation from the average value is expressed as a percentage, and the value of the percentage can be obtain by the absolute value of the deviation from the average value dividing by the average value of the masses. As can be seen from Table 1, the deviations of the masses are not more than 4%.

**Table 1**

| No | Mass (mg) | Absolute value of deviation from average value (%) |
|---|---|---|
| 1 | 655.815 | 0.6% |
| 2 | 633.422 | 2.9% |
| 3 | 645.542 | 1.0% |
| 4 | 665.844 | 2.1% |
| 5 | 640.038 | 1.9% |
| 6 | 675.967 | 3.6% |
| 7 | 643.786 | 1.3% |
| 8 | 658.871 | 1.0% |
| 9 | 650.425 | 0.3% |
| Average value of the masses | 652.19 | - |

The preparation method of the polytetrafluoroethylene porous material is as follows:
(1) Mixing a polytetrafluoroethylene emulsion having a solid content of 60%, a chitosan having a particle size of 30 nm, and a 5% (mass ratio) sodium alginate solution uniformly to prepare a spinning solution according to a mass ratio of 50:30:4;
(2) Preparing a polytetrafluoroethylene precursor film by using an electrospinning method in an oriented electrospinning device under vacuum conditions;
(3) Winding 5 layers of the precursor film onto a cylinder support mould, and sending to a tube furnace for sintering in a vacuum or a protective atmosphere, the sintering is carried out by multi-steps and successive sintering processing via a temperature control program, and heating from room temperature to 150 °C at a rate of 5 °C / min, holding at 150 °C for 60 min, and then heating to 400 °C at a rate of 5 °C / min, and holding at 400 °C for 120 min.
(4) After sintering, cooling via the temperature control program, and performing subsequent treatment according to conventional techniques to obtain a porous polytetrafluoroethylene hollow fiber membrane having a secondary pore structure.

The material can be used for gas-liquid separation and liquid-liquid separation to achieve accurate grading filtration. For example, it is suitable for filtration of two-component or multi-component gas (liquid) (such as volatile solute aqueous solution). Moreover, it has large flux, high rejection rate, high separation coefficient, and excellent hydrophobic property, and is not easily contaminated (such as liquid infiltration). Therefore, it has the advantages of high efficiency and long-term efficiency.

### Embodiment 2

The porous material of the present invention is a porous ceramic having a tertiary pore structure, wherein, the cavity walls of first-level pore cavities which are evenly distributed and interconnected are provided with second-level pore cavities which are evenly distributed and interconnected, the cavity walls of the second-level pore cavities are provided with third-level pore cavities, which are evenly distributed and interconnected. The three levels of the pore cavities also interconnected, and the interconnection is a three-dimensional interconnection. The porous material of each level of the material body is a continuous structure respectively. A maximum outer boundary of each level porous material is equivalent to a space boundary of an entire material body. The total effective porosity is 75%, the average pore size of the large pore cavities is 500 µ m, and the cavity walls of the large pore cavities are provided with interconnected second-level pores having an average pore size of 30 µ m, and the cavity walls of the second-level pores are provided with interconnected third-level pores having an average pore size of 800 nm.

Nine three-dimensional blocks with the same size of 10 mm × 10 mm × 10 mm were randomly taken from the porous material by mechanical processing method and the masses thereof were measured with a Mettler-Toledo XP26 Microbalance. The results are shown in Table 2, wherein an absolute value of a deviation from the average value is expressed as a percentage, and the value of the percentage can be obtained by the absolute value of the deviation from the average value dividing by the average value of the masses. As can be seen from Table 2, the deviations of the masses are not more than 4%.

**Table 2**

| No | Mass (mg) | Absolute value of deviation from average value (%) |
|---|---|---|
| 1 | 1254.855 | 2.4% |
| 2 | 1300.448 | 1.2% |
| 3 | 1280.488 | 0.4% |
| 4 | 1310.841 | 2.0% |
| 5 | 1265.184 | 1.6% |
| 6 | 1279.941 | 0.4% |
| 7 | 1293.218 | 0.6% |
| 8 | 1280.215 | 0.4% |
| 9 | 1305.565 | 1.5% |
| Average value of the masses | 1285.639 | - |

The preparation method of the porous ceramic is as follows:
(1) Selecting polystyrene spheres having a particle size of 800 ± 50 nm and assembling them into a three-dimensional ordered colloidal template. Preparing a ceramic nano solution and introducing the tantalum nano solution into the three-dimensional ordered colloidal template made of the polystyrene spheres to obtain a mixture. Drying the mixture and then crushing to obtain particles having a particle size of 5 µm;
(2) Selecting starches with a particle size of 800 ± 50 nm and mixing with distilled water at a weight ratio of 1:50 to prepare a starch solution. Mixing the above-mentioned particles, ethyl cellulose having a particle size of 30 µm and the starch solution into a slurry at a weight ratio of 15:2:7, and uniformly impregnating the slurry onto a polyurethane foam having a pore size of 550±20 µm;
(3) Sintering the impregnated polyurethane foam in a vacuum or a protective atmosphere, and then performing a conventional treatment according to a porous ceramic preparation process to obtain the porous ceramic having a tertiary pore structure.

The multilevel ceramic can be used as a medical implant material. The first-level pores are particularly suitable for meeting the needs of the ingrowth for living tissue such as blood vessels; the second-level pores are particularly suitable for colonies of cells; the third-level pores are particularly advantageous for satisfying the requirements of cell adhesion and differentiation due to its large number of nanopores, and the specific surface area thereof is large enough to load many growth factors. Moreover, the connectivity of the pores is good, and pores of the same level are interconnected and the pores of different levels are also interconnected, which can fully satisfy the requirements of infiltration and transmission of blood and tissues, and realize the excretion of protein degradation products and metabolic products. Therefore, it is a true bone regeneration material.

### Embodiment 3

The porous material of the present invention is a porous glass having a secondary pore structure, wherein, the cavity walls of first-level pore cavities, which are evenly distributed and interconnected, are provided with second-level pore cavities which are evenly distributed and interconnected, the cavity walls of the second-level pore cavities are provided with third-level pore cavities which are evenly distributed and interconnected. The three levels of the pore cavities are also interconnected, and the interconnection is a three-dimensional interconnection. The porous material of each level of the material body is a continuous structure respectively. A maximum outer boundary of each level porous material is equivalent to a space boundary of an entire material body. The total effective porosity is 80%, the average pore size of the large pore cavities is 20 µm, and the cavity walls of the large pore cavities are provided with interconnected second-level pores having an average pore size of 800 nm, and the cavity walls of the second-level pores are provided with interconnected third-level pores having an average pore size of 10 nm.

Nine three-dimensional blocks with the same size of 10 mm × 10 mm × 10 mm were randomly taken from the porous material by mechanical processing method and the masses thereof are measured with a Mettler-Toledo XP26 Microbalance. The results are shown in Table 3, wherein an absolute value of a deviation from the average value is expressed as a percentage, and the value of the percentage can be obtained by the absolute value of the deviation from the average value dividing by the average value of the masses. As can be seen from Table 3, the deviations of the masses are not more than 4%.

**Table 2**

| No | Mass (mg) | Absolute value of deviation from average value (%) |
|---|---|---|
| 1 | 1898.125 | 2.0% |
| 2 | 1900.321 | 2.1% |
| 3 | 1875.653 | 0.8% |
| 4 | 1798.214 | 3.4% |
| 5 | 1854.941 | 0.3% |
| 6 | 1868.651 | 0.4% |
| 7 | 1825.632 | 1.9% |
| 8 | 1888.715 | 1.5% |
| 9 | 1835.675 | 1.3% |
| Average value of the masses | 1860.659 | - |

The preparation method:
(1) Selecting pure SiO₂, H₃BO₃ and Na₂CO₃ as main raw materials, according to Na₂O 10%, B₂O₃ 25% and SiO₂ 65% (molar percentage). Melting at 1400 °C, constantly stirring and holding for 4 hours, and then casting into a mould;
(2) Phase separation: using a temperature control program to heat from room temperature to 520 °C at a rate of 25 °C / min and holding at 520 °C for 24 hours; then heating to 670 °C at a rate of 20 °C / min and holding at 670 °C for 36 hours; then cooling at a rate of 5 - 10 °C / min;
(3) Leaching in a 1 - 2 mol/L acid solution at 95 °C, performing subsequent treatment including washing, drying, crushing, etc. to obtain nano glass microbeads;
(4) Uniformly mixing methylcellulose having a particle size of 20 µm and the nano glass microbeads at a volume ratio of 3:1, and uniformly pouring into a three-dimensionally interconnected polyester foam, and then pressing into a compact green body;
(5) Performing conventional heat treatments such as vacuum sintering, annealing, cooling, etc. to obtain the porous glass having a tertiary pore structure.

The multilevel glass can be used as a carrier for various purposes, such as a reaction template of a substance to prepare a multilevel nano/micron-sized product; such as a catalyst carrier or a drug sustained-release carrier, which has the advantages of low dosage, high efficiency, constant, uniform and long-term efficiency.

### Embodiment 4

The porous material of the present invention is polytetrafluoroethylene having a tertiary pore structure, wherein, the cavity walls of first-level pore cavities which are evenly distributed and interconnected are provided with second-level pore cavities which are evenly distributed and interconnected, the two levels of the pore cavities are also interconnected, and the interconnection is a three-dimensional interconnection. Each level porous material of the material body is a continuous structure respectively. The total effective porosity is 80%, the average pore size of the large pores is 1000 nm, and the cavity walls of the large pores are provided with interconnected second-level pores having an average pore size of 100 nm, and the cavity walls of the second-level pores are provided with interconnected third-level pores having an average pore size of 10 nm.

Nine three-dimensional blocks with the same size of 10 mm × 10 mm × 10 mm were randomly taken from the porous material by mechanical processing method and the masses thereof were measured with a Mettler-Toledo XP26 Microbalance. The results are shown in Table 1, wherein an absolute value of a deviation from the average value is expressed as a percentage, and the value of the percentage can be obtained by the absolute value of the deviation from the average value dividing by the average value of the masses. As can be seen from Table 4, the deviations of the masses are not more than 4%.

**Table 4**

| No | Mass (mg) | Absolute value of deviation from average value (%) |
|---|---|---|
| 1 | 521.317 | 2.0% |
| 2 | 508.624 | 0.5% |
| 3 | 505.145 | 1.2% |
| 4 | 501.528 | 1.9% |
| 5 | 518.521 | 1.5% |
| 6 | 516.752 | 1.1% |
| 7 | 504.883 | 1.2% |
| 8 | 510.615 | 0.1% |
| 9 | 512.125 | 0.2% |
| Average value of the masses | 511.0567 | - |

The preparation method of the polytetrafluoroethylene porous material is as follows:
(1) Mixing PTFE fine powder with polyethylene glycol having a molecular weight of 1000; stirring and heating to 380 °C, and keeping stirring for 60 min; then rapidly cooling to room temperature for crushing, and pulverizing at below 0 °C to obtain polytetrafluoroethylene particles;
(2) Dispersing the polytetrafluoroethylene particles having a particle size of 200 nm to prepare an emulsion with a solid content of 60%, and uniformly mixing them with chitosan having a particle size of 100 nm and a sodium alginate solution of 5% (mass ratio) according to a mass ratio of 50 : 30 : 4 to formulate into a spinning solution;
(3) Preparing a polytetrafluoroethylene precursor film by using an electrospinning method in an oriented electrospinning device under vacuum conditions;
(4) Winding 5 layers of the precursor film onto a cylinder support mould, and sending to a tube furnace for sintering in a vacuum or a protective atmosphere, the sintering is carried out by multi-steps and successive sintering processing via a temperature control program, and heating from room temperature to 160 °C at a rate of 6 °C / min, holding at 160 °C for 100 min; and then heating to 280 °C at a rate of 6 °C / min, and holding at 280 °C for 60 min; and then heating to 400 °C at a rate of 6 °C / min, and holding at 400 °C for 100 min.
(5) After sintering, cooling via the temperature control program, and performing subsequent treatment according to conventional techniques to obtain a porous polytetrafluoroethylene hollow fiber membrane having a tertiary pore structure.

The material can be used for gas-liquid separation and liquid-liquid separation to achieve accurate grading filtration. For example, it is suitable for filtration of two-component or multi-component gas (liquid) (such as volatile solute aqueous solution). Moreover, it has large flux, high rejection rate, high separation coefficient, and excellent hydrophobic property, and is not easily contaminated (such as liquid infiltration). Therefore, it has the advantages of high efficiency and long-term efficiency.

## Claims

1. A porous non-metallic material, comprising a material body, wherein the material body is composed of pore cavities and cavity walls formed by surrounding the pore cavities in three-dimensional space, the pore cavities are uniformly distributed and each pore cavity is three-dimensionally interconnected, wherein the pore cavities are uniformly distributed refers to that the pore cavities are uniformly distributed under any unit-level volume on the porous material.

2. The porous non-metallic material according to claim 1, wherein the unit-level volume refers to a cubic centimeter level, or a cubic millimeter level, or a smaller unit-level volume.

3. The porous non-metallic material according to claim 1 or 2, wherein the pore cavities are uniformly distributed refers to that masses of a plurality of three-dimensional blocks randomly selected from the porous material and having volumes of less than or equal to one cubic centimeter and same sizes are substantially the same.

4. The porous non-metallic material according to claim 3, wherein the masses are substantially the same means, a plurality of three-dimensional blocks having the volumes of less than or equal to one cubic centimeter and the same sizes are randomly selected from the porous material to measure masses, an average value of the masses is obtained, and an absolute deviation of the mass of any one of the plurality of three-dimensional blocks from the average value of the masses is less than or equal to 4% of the average value of the masses of the three-dimensional blocks.

5. The porous non-metallic material according to any one of claims 1-4, wherein masses of a plurality of three-dimensional blocks randomly selected from the porous material and having the volumes of less than or equal to one cubic millimeter and the same sizes are substantially the same.

6. The porous non-metallic material according to claim 5, wherein the masses are substantially the same means, a plurality of three-dimensional blocks having the volumes of less than or equal to one cubic millimeter and the same sizes are randomly selected from the porous material to measure masses, an average value of the masses is obtained, and an absolute deviation of the mass of any one of the plurality of three-dimensional blocks from the average value of the masses is less than or equal to 4% of the average value of the masses of the three-dimensional blocks.

7. The porous non-metallic material according to any one of claims 1-6, wherein the porous non-metallic material is composed of a multilevel porous material, wherein a body of the multilevel porous material is composed of pore cavities graded by a material pore size and cavity walls formed by surrounding the pore cavities in three-dimensional space, and the cavity walls are provided with lower-level pore cavities, and pore cavities of a same level are three-dimensionally interconnected and the pore cavities of different levels are also interconnected.

8. The porous non-metallic material according to any one of claims 1-7, wherein next-level porous materials constitute cavity walls of previous-level pore cavities.

9. The porous non-metallic material according to any one of claims 1-7, wherein cavity walls of upper-level pore cavities are composed of a lower-level multilevel porous material.

10. The porous non-metallic material according to any one of claims 1-7, wherein cavity walls of upper-level pore cavities are composed of a composite of each level of lower-level porous materials.
